# EUROPEAN PATENT SPECIFICATION

(11) **EP 2 988 453 B1**
(45) Date of publication and mention of the grant of the patent: **20.11.2024**
(21) Application number: 14306281.8
(22) Date of filing: 18.08.2014
(51) Int. Cl.: H04W 24/02, H04W 28/00

(54) **METHOD FOR RESOURCE ALLOCATION, A NODE, A CONTROLLER AND USER EQUIPMENT**
VERFAHREN ZUR RESSOURCENZUWEISUNG, KNOTEN, STEUERUNG UND BENUTZERGERÄT
PROCÉDÉ D'ATTRIBUTION DE RESSOURCES, NOEUD, CONTRÔLEUR ET ÉQUIPEMENT UTILISATEUR

(43) Date of publication of application: 24.02.2016
(73) Proprietor: Alcatel Lucent, 91620 Nozay (FR)
(72) Inventor: Claussen, Holger, Dublin, 15 (IE); Razavi, Rouzbeh, Dublin, 15 (IE)
(74) Representative: Greenwood, Matthew David

(56) References cited:
- EP-A1- 2 763 487
- WO-A1-2014/040623
- US-A1- 2012 033 622
- US-A1- 2013 286 941
- US-A1- 2014 113 616

## Description

### TECHNICAL FIELD

Aspects relate, in general, to a method for resource allocation, a node, a controller and user equipment.

### BACKGROUND

A diverse range of wireless access technologies are available, and many user equipment devices (UEs) can support a wide range of these radio access technologies simultaneously such that seamless convergence of these technologies is becoming a reality. For example, some 4G UE devices can support TD-LTE, FDD-LTE, TD-SCDMA, WCDMA, GSM, and WiFi.

An objective of 5G for mobile devices is the provision of user-centric services in which the seamless convergence of multiple radio access technologies (RATs), such as those mentioned above, is an integral part of the device operation. To this end, efficient transport protocols supporting simultaneous multi-path traffic from two points are an area of scrutiny.

Published US patent application 2013/0286941 A1discloses a method of handling data traffic passing between a server and a terminal device over first and second networks based on different RATs, in which the transmission rate over one of the networks is adjusted in response to a determined change in the transmission rate over the other network.

Published European patent application EP 2 763 487 A1 discloses a method of performing radio resource management for a network node in a wireless communication system, comprising the steps of performing sub access system allocation to serve at least one mobile device and adaptively adjusting the allocation according to sensing results from the at least one mobile device.

Published US patent application 2014/113616 discloses the control of background activities of a wireless terminal. The wireless terminal is arranged to receive a policy signal comprising instructions to curtail background activities based on a policy signal relating to the background activity.

### SUMMARY

According to an example, there is provided a method, in a multiple-RAT communications system, for resource allocation between user equipment (UE) and a base station node of the system, wherein the UE is operable to receive data contemporaneously from the node and at least one other source, characterised in that the method comprises the steps of generating a measure representing the amount of data received by the UE from the or each other source, the amount of data and a measure thereof being unknown or unavailable a priori, and using the generated measure to regulate a schedule for data communications between the UE and the base station node. Contemporaneous reception of data from multiple sources can include simultaneous reception of data by the UE from the or each of the multiple sources. For example, the UE can receive data from the node and one or more other sources simultaneously, or within a period of time such as a time slot for the system, including serially, successively or in parallel within the time slot for example.

Generating a measure can include receiving or monitoring traffic data at the base station node representing data received by the UE from the or each other source. The schedule for data communications between the UE and the base station node can be regulated to provide a predetermined minimum data throughput to the UE. A predetermined minimum can be selected to enable the UE to accommodate certain services, such as services demanding a relatively higher resource, such as video streaming and so on.

The schedule for data communications between the UE and the base station node can be regulated to provide a predetermined minimum data throughput to the UE and respective ones of multiple other UEs of the system communicatively coupled to the base station node. This can enable multiple UEs to provide services that may consume a relatively higher level of resource. The traffic data received at the base station node can be transmitted to the node by the UE. The traffic data received at the base station node can be generated using a controller of the node operable to infer or determine the amount of data received by the UE from the or each other source.

According to an example, there is provided a node, in a multiple-RAT communications system, operable to serve a UE that is capable of contemporaneously receiving data from the node and at least one other source, the node including a controller to generate a measure representing the amount of data received by the UE from the or each other source, the amount of data and a measure thereof being unknown or unavailable a priori, and a scheduler to regulate a schedule for data communications between the UE and the node using the measure generated by the controller. The controller can receive or monitor traffic data representing data received by the UE from the or each other source. The scheduler can regulate data communication to the UE to provide a predetermined minimum data throughput to the UE. The scheduler can regulate data communication to the UE to provide a predetermined minimum data throughput to the UE and respective ones of multiple other UEs communicatively coupled to the node. The controller can receive or monitor traffic data representing data received by respective ones of the multiple other UEs.

According to an example, there is provided a controller suitable for use with a node of a multiple-RAT communications system, the node operable to serve a UE that is capable of contemporaneously receiving data from the node and at least one other source, the controller operable to generate a measure representing the amount of data received by the UE from the or each other source, the amount of data and a measure thereof being unknown or unavailable a priori, and provide data representing the measure to a scheduler of the node operable to regulate a schedule for data communications between the UE and the node.

The controller can monitor a multi path TCP parameter to determine a proportion of data traffic routed to the UE using the or each other source. The controller can infer, or otherwise determine, a proportion of data traffic routed to the UE using a rateless code based transport protocol using the or each other source on the basis of an acknowledgement message received at the controller from the UE signalling receipt at the UE of a sufficient number of packets for a batch of data for the UE.

According to an example, there is provided user equipment (UE) operable to receive data from a node and at least one other source in a multi-RAT communications system during the same period of time, wherein the UE is operable to provide data to a controller of the node so as to enable the controller to generate a measure representing the amount of data received by the UE from the or each other source, the amount of data and a measure thereof being unknown or unavailable to the controller a priori.

### BRIEF DESCRIPTION OF THE DRAWINGS

Embodiments will now be described, by way of example only, with reference to the accompanying drawings, in which:
Figure 1 is a flow chart illustrating a method, in a heterogeneous communications system, for resource allocation between user equipment (UE) and a base station node according to an example;
Figure 2 is a schematic representation of a node according to an example;
Figure 3 is a schematic representation showing exemplary achievable throughput for UEs in a typical scenario;
Figure 4 is a schematic representation showing exemplary achievable throughput for UEs according to an example; and
Figure 5 is a schematic representation of the connection between input and output symbols of a rateless coding scheme in the form of a bipartite graph, according to an example.

Example embodiments are described below in sufficient detail to enable those of ordinary skill in the art to embody and implement the systems and processes herein described. It is important to understand that embodiments can be provided in many alternate forms and should not be construed as limited to the examples set forth herein.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Multi-path TCP (MPTCP) can be utilised as an efficient transport protocol that can support simultaneous or contemporaneous multi-path traffic from two points in a communications network, such as a heterogeneous communication network in UEs can receive (and transmit) data using multiple RATs simultaneously.

That is, MPTCP can provide support for multiple simultaneous traffic streams. However, the allocation of data between active UEs from a serving base station node can be problematic as the serving node typically has no visibility of the amount of data that the active UEs are receiving from other sources. For example, a UE can receive data from the node as well as from a WiFi hotspot node and so on. Since the hotspot node may not be controlled by the network operator, it has no visibility of the amount of data that is being consumed by the UE from that source.

The base station node, which is the serving cell, is identified by the UE through a radio access technology (RAT) selection procedure. In this case the serving base-station has complete information about what volume of data has been sent to each UE. With this, scheduling users to achieve a fair distribution of bandwidth is straightforward. However, as noted, when a UE can receive traffic from multiple sources simultaneously or contemporaneously, such as in the same time slot or period for example, a serving base-station cannot currently manage the scheduling of data objectively so as to ensure that a UE is not being provided with too little or too much bandwidth or resources in view of the other sources to which it is connected. That is, the serving node cannot typically achieve the same fairness due to incomplete information about the volume of data a UE might be receiving through other routes, which are typically out of control of the network provider.

According to an example, there is provided a method for enabling a network provider to control the overall quality of service for connected UEs, even in the case where some UEs receive data via other streams from uncontrolled access networks or sources. This functionality allows the network provider to play a key role in the future, even if much of the traffic is provided through uncontrolled (that is, non-operator) networks by bridging the gap between all other networks and enabling consistently high performance.

Thus, to enable the operator controlled network to control the overall quality of service in a Multi-RAT environment, at least one of the serving base-stations can additionally consider the traffic that a UE is receiving from other sources than the said base-station when scheduling users. This can allow smoothing of the aggregated offered traffic amongst all UEs (i.e. realization of fairness amongst users) without needing to control all serving base-stations/links in the process.

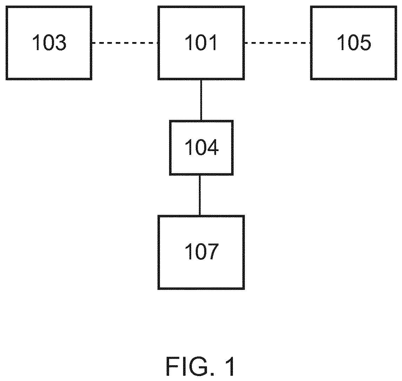

Figure 1 is a flow chart illustrating a method, in a heterogeneous communications system, for resource allocation between user equipment (UE) and a base station node according to an example. The steps can be executed repeatedly in the operator's network as a control loop.

In block 101 traffic information 104 of other paths/networks/sources (e.g. home WiFi, other operator, etc.) from which a UE can receive data is derived. More particularly, a measure 104 representing the amount of data received by the UE from the or each other source is generated. That is, for example, the volume of data received by the UE from the or each other source is determined.

In an example, the data 104 can be generated using various methods. For example, the data can be generated using an inference based method based on the observed traffic through the controlled paths (e.g. an LTE network), or by exchanging information (see below for a more detailed description), or by obtaining traffic information from the UE using UE messaging. For example, an application executing on the UE or a standardized function can be used to periodically issue traffic information 104 to the node.

In block 107, the generated measure 104 is used to regulate a schedule for data communications between the UE and the base station node. Scheduling of UE traffic in controlled network(s) thus enables objectives such as fairness, minimum UE throughputs and so on of the combined network (controlled and uncontrolled) to be achieved. That is, for example, data relating to uncontrolled resources being used by a UE can enable the controlled resources to be modified or otherwise throttled in order to enable a more even distribution of resources across multiple UEs. A determination of the amount of data being consumed by a UE from one or more uncontrolled (other) sources can therefore be used to determine a level of resource provided to the UE by the controlled network, thereby enabling a fair distribution across multiple UEs. Fair can simply mean that there is an even (or substantially even) distribution, or that UEs that are using services that may be consuming relatively more data than other UEs are apportioned more resource.

According to an example, traffic that a UE is receiving from paths (sources) distinct from the node that is serving the UE is estimated. The estimated traffic data is then used for scheduling decisions by the serving node. Thus, for example, in case of the widely used and popular proportionally fair scheduling scheme, the received traffic over the past window is not only the traffic directly sent to the UE through a base-station node, but rather the sum of the total traffic received through all paths.

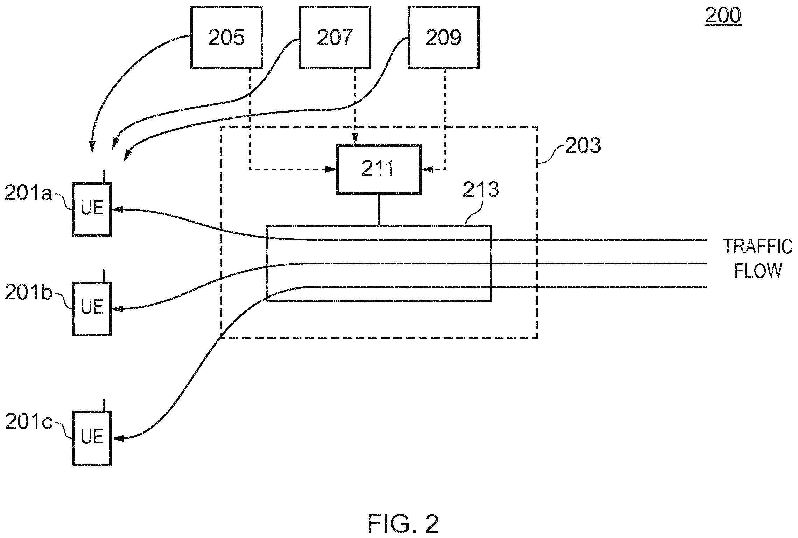

In this connection, figure 2 is a schematic representation of a node according to an example. In the example of figure 2, the node 203, which is a base station (BS) node of a heterogeneous communication system 200 that serves UEs 201a-c can provide data to the UEs. UE 201a can also receive data from one or more other sources 205, 207, 209.

In the example of figure 2, a controller 211 is located in the macrocell BS node 203. In other examples, the controller 211 can be located elsewhere, such as within the core network of the system in question, and be for use with at least one node, such as node 203 for example. The controller 211 gathers information about the traffic that users receive through other paths and uses this information to enable scheduling for users using scheduler 213, taking into account the volume of data which users receive through other routes from the sources 205, 207 209. In an example, a measure of or representing the amount or volume of data received by a UE from the or each other source 205, 207, 209 is determined, and some examples of ways in which the measure can be determined are described in more detail below.

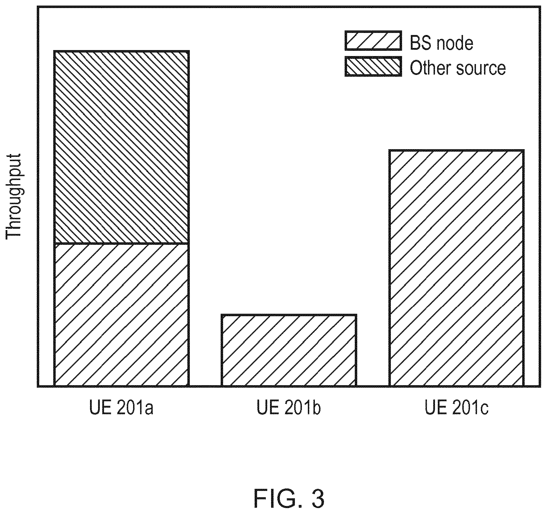

Figure 3 is a schematic representation showing exemplary achievable throughput for UEs 201a-c of figure 2 in a typical scenario. The achievable throughput of the UE 201b is at a much lower level compared to the other two users. This could be due to a number of reasons including a low SINR of the user for example.

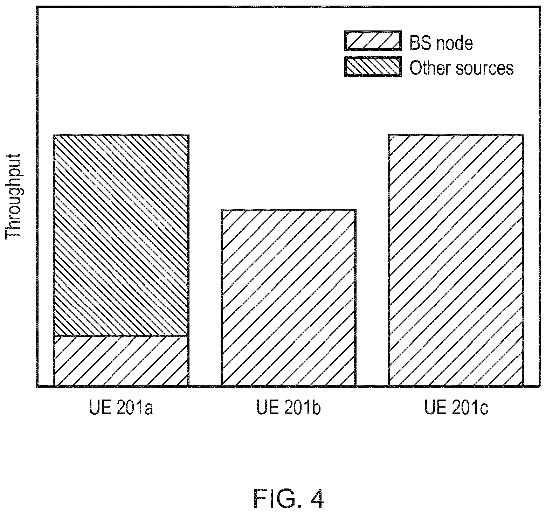

Figure 4 is a schematic representation showing exemplary achievable throughput for UEs 201a-c of figure 2 according to an example. When the controller 211 becomes aware of the fact that UE 201a is simultaneously receiving data from one or more other sources 205, 207, 209, it can communicate this information to the scheduler 213 and the scheduler 213 can subsequently adjust the way in which resources are allocated to the UE 201a.

Thus, as illustrated in figure 4, the throughput values associated with each user (UE 201a-c) after the scheduler 211 takes into account the traffic that UE 201a is receiving from one or more of the other sources is illustrated. It can be seen that in this case, although UE 201a has been allocated smaller share of the resources, a fair resource allocation (aggregated) and a smooth quality of experience for all users can be realised (e.g. enabling video streaming for all users, etc.).

The concept is broadly applicable to any scheduling strategies and enables the network provider to control the quality of service in a joint multi-RAT network even if many radio access technologies are not under the operator's control. This way the operator is enabled to play a key role for providing network services across future multi-RAT networks.

According to an example, the following describes how a serving base-station can infer the volume of data traffic that a UE might have received through other paths.

In the case of MPTCP communications for example, that allow a TCP connection to use multiple paths to maximize resource usage and increase redundancy, the redundancy offered enables inverse multiplexing of resources, and thus increases TCP throughput to the sum of all available link-level channels instead of using a single one as required by plain TCP. MPTCP is backwards compatible with plain TCP, and can be particularly useful in the context of wireless networks. For example, both Wi-Fi and a mobile network is a typical use case. In addition to the gains in throughput from inverse multiplexing, links may be added or dropped as the user moves in or out of coverage without disrupting the end-to-end TCP connection.

MPTCP allows multiple subflows to be set up for a single MPTCP session. An MPTCP session starts with an initial subflow, which is similar to a regular TCP connection. After the first MPTCP subflow is set up, additional subflows can be established. Each additional subflow also looks similar to a regular TCP connection, complete with SYN handshake and FIN tear-down, but rather than being a separate connection, the subflow is bound into an existing MPTCP session. Data for the connection can then be sent over any of the active subflows that has the capacity to take it.

When considering MPTCP, each subflow acts exactly like a single TCP connection. Therefore, the TCP sequence numbers of the packet refer to the packets of the subflow. However, the position of the subflow packets with respect to the original data must also be determined. A second inner sequence number that is located in the TCP options is typically used for this purpose.

According to an example, using the inner data sequence numbers, a base-station node can infer what portion of the traffic is being transmitted over that base-station. For example, if 1000 packets of a subflow cover a range of data sequence numbers equivalent to 2000 packets, the base-station node can therefore determine that 50% of the traffic is being routed through other paths to a user. The base-station node can define a window of W packets, and sequence numbers can be checked intermittently after W packets have been transmitted. That is, the base station node can examine the range of sequence numbers every W packets for example.

In an example, different methods including moving average or exponentially weighted moving average schemes can be used to update the quantity that expresses the portion of the traffic that is being sent over other routes.

In an alternative example, a base-station node can use time windows to take samples of data packets in order to infer this information. In this case for example, if S1 represents a subflow sequence number and D1 denotes the data sequence number at time t1 and S2 and D2 represents the same quantities at time t2, the portion of traffic that has been transported through the base station node can be expressed as (S2-S1)/(D2-D1), where T=t2-t1 is the time window. The time window can be automatically adjusted based on the users' throughput. In this way, the base-station may only need few packet inspection operations in order to be able to infer the traffic being routed through other paths to a user.

Not all UEs may be using multipath TCP. In an example, in order to detect those users, the TCP handshaking process can be monitored by the base-station node. In an MPTCP session, a Host A will add an MP_CAPABLE option to the SYN packet. If the receiving Host, B, supports MPTCP then it will add the same MP_CAPABLE option to the SYN-ACK response packet. The final ACK from Host A will also contain the MP_CAPABLE option establishing the multipath TCP session in between Host A and Host B. Therefore, by monitoring the handshake process the base-station node can identify potential users that may receive traffic from other sources.

Another method for using multiple radio access technologies simultaneously for a single traffic stream is based on rateless coding. Rateless codes can provide an extremely high level of flexibility in a sense that a decoder only needs to receive a sufficient number of rateless encoded packets to be able to decode the original data. In an ideal setup, the receiver can decode k original packets upon reception of any k rateless encoded packets. In practice, however, there might be slight overhead (approximately 5% for example).

This provides great flexibility when exploring multiple radio links simultaneously since the transmitter/controller does not require any knowledge concerning quality or capacity of individual links. In an example, rateless encoded packets can be sent through all available radio interfaces and can be combined at the receiver. As soon as enough encoded packets are received, the decoder can re-construct the data. Accordingly, neither the transmitter nor the receiver needs to be concerned about the quality of individual radio links. In contrast to sending data packets sequentially, where failed packets ought to be re-transmitted, with rateless codes failed/erased packets can be simply ignored. The transmitter can continuously send rateless encoded packets until the decoder receives a sufficient number of correct packets to reconstruct the data.

By way of background information in connection with rateless coding, Luby transform (LT) codes represent a practical realization of rateless codes and can be used to explain the principles of rateless codes. Other implementations/variants are possible.

### Encoding Procedure

Let us start by assuming a data message consisting of K input (source) symbols v = [v1 v2 ,... vK], with each symbol containing an arbitrary number of bits. The original data message v can be referred to as a "file". In a hypothetical example, consider a data message containing four two-bit symbols given by the vector v =[00 10 11 01].

Subsequently, the LT-encoded symbols c = [cj],2 j = 1, ..., N, are given by the modulo-2 sum (i.e., the eXclusive OR (XOR)) of the dc distinct input symbols, chosen uniformly at random. The actual dc-value of each symbol to be encoded is then chosen from a predefined distribution f(dc), which is also sometimes referred to as the output distribution. Assume that the first dc-value sampled from f(dc) is 2. Consequently, two input symbols will be chosen at random from v. If the two selected source symbols correspond to the first and second symbol in v, c1 will be calculated as 00 XOR 10 = 10.

The encoding algorithm proceeds in the same manner, each time selecting a dc-value sampled pseudo-randomly from f(d_{c}) and then calculating the encoded symbol according to the XOR product of a dc-number of pseudo- randomly selected source symbols.

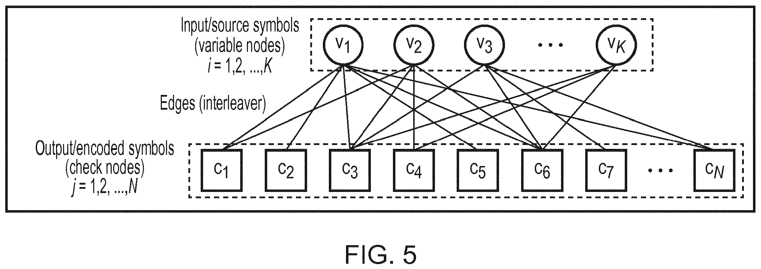

The connection between the input and output symbols can also be diagrammatically represented by means of a bipartite graph, as shown schematically in figure 5. Using graph-related terminology, the input source symbol may be referred to as a variable node, while the LT-encoded symbol can be regarded as a check node. The number of edges emerging from each check node corresponds to the dc-value sampled from f(d_{c}) and for this reason, dc is sometimes referred to as the check degree.

### Decoding Procedure

Consider an erasure channel, in which encoded symbols of c are erased during the ensuing transmission. The task of the decoder is that of recovering the erased symbols from the 'unerased' ones. The decoding process commences by locating a degree-one input symbol; i.e., a symbol that is not XOR-combined with any other. The decoder will then modulo-2 add the value of this symbol to all the LT-encoded symbols relying on it and then removes the corresponding modulo-2 connections, where each connection is represented by an edge on the associated bipartite graph (figure 5). The decoding procedure continues in an iterative manner, each time starting from a degree-one symbol.

### Rateless codes with Feedback

According to the above description and with an efficient implementation, any N original packets can be decoded using any N rateless codded packets with a high probability (in practice there is normally a marginal overhead). This removes the requirement for the sender to retransmit a data packet that is dropped or received with errors that cannot be corrected (if error correction codes are in use). Instead, the sender can continue transmitting rateless coded packets until N packets are received. At this point the receiver can send a single acknowledgment packet to allow the sender to move on to the next group of packets.

In a rateless code transport protocol, the decoder requires a sufficient number of received packets. When the decoder (i.e. a UE in the present context) has received a sufficient number, it sends an acknowledgment packet for the batch to all links on the uplink. Thus, according to an example, if the size of the batch is known, the base-station node serving the UE that has transmitted the acknowledgement packet can infer the portion (or proportion) of traffic that was transported through other links from other sources.

However, since decoding is a random process (i.e. the exact number of encoded packets for decoding a batch with a given size may not be known in advance), the inferred information will typically be an estimate, but will be sufficient to serve the purpose. Therefore, the only information needed is the size of the batch, which is normally agreed and exchanged between the encoder and decoder at the early stage of the communication. Therefore, if the base-station node knows the size of the batch it can estimate the number of encoded packets to decode the batch by considering a 5-15% overhead, depending on the batch size. Subsequently, the base-station can count the encoded packets that are being sent to the UE. Once the batch acknowledgment is sent from the UE, the base-station can then estimate the portion of traffic that the UE has received through other links by comparing the number of packets sent for that batch against the estimated number of encoded packets required to decode the batch.

Alternatively, if encoded packets contain a sequence number, similar to the multipath TCP case, the base-station node can define a window of W packets, and after sending W encoded packets it can examine the range of sequence number of encoded packets covered with this W packets, where W should be smaller than size of the batch. A higher value for W will provide a more robust estimation, but at the cost of slower adaption of the rate.

In an example, the UE in question has the capability to understand and decode rateless codes. This functionality can be provided through a process that can be located either at the transport layer or at the application layer. However, as part of its function, this process can combine encoded packets that are being received from different links. This is akin to the "join" function of the multipath TCP case. The process can further keep records of which encoded packets are received through which links. For example, by modifying the process such it can record which encoded packet has been received through which link, each base station can send a query to the UE to determine the portion of encoded packets that are received from the link between the said base-station and the UE.

Subsequently, each base-station can send a query to that process and to determine the portion of encoded packets received from the link between that base-station and the UE.

Alternatively, information about the traffic that is sent from other sources can be obtained using messages sent by the originating (encoding) proxy server. Inferring this information does not require any additional communication.

## Claims

1. A method, in a multiple-radio access technology, RAT, communications system, for resource allocation between user equipment, UE, and a base station node of the system, wherein the UE is operable to receive data contemporaneously from the node and at least one other source, the method comprising the steps of:
generating (104) a measure representing the amount of data received by the UE from the or each other source, the amount of data and a measure thereof being unknown or unavailable a priori; and
using (107) the generated measure to regulate a schedule for data communications between the UE and the base station node, **characterized in that**:
the generating a measure includes monitoring at the base station node traffic data representing data received by the UE from the at least one other source, and
the traffic data is transmitted to the base station node by the UE or generated using a controller of the base station node operable to infer or determine the amount of data received by the UE from the at least one other source,
wherein the schedule for data communications between the UE and the base station node is regulated to provide a predetermined minimum data throughput to the UE.

2. A method as claimed in claim 1, wherein the schedule for data communications between the UE and the base station node is regulated to provide a predetermined minimum data throughput to the UE and respective ones of multiple other UEs of the system communicatively coupled to the base station node.

3. A node, in a multiple-radio access technology, RAT, communications system, operable to serve a user equipment, UE, that is capable of contemporaneously receiving data from the
node and at least one other source, the node including:
a controller to generate a measure representing the amount of data received by the UE from the or each other source, the amount of data and a measure thereof being unknown or unavailable a priori; and
a scheduler to regulate a schedule for data communications between the UE and the
node using the measure generated by the controller, wherein the scheduler is operable to regulate data communication to the UE to provide a predetermined minimum data throughput to the UE.

4. A node as claimed in claim 3, wherein the controller is operable to receive or monitor traffic data representing data received by the UE from the or each other source.

5. A node as claimed in claims 3 or 4, wherein the scheduler is operable to regulate data communication to the UE to provide a predetermined minimum data throughput to the UE and respective ones of multiple other UEs communicatively coupled to the node.

6. A node as claimed in claim 5, wherein the controller is operable to receive or monitor traffic data representing data received by respective ones of the multiple other UEs..

## Patentansprüche

1. Verfahren in einem Kommunikationssystem mit Mehrfachfunkzugriffstechnologie, RAT, zur Ressourcenzuteilung zwischen einer Teilnehmereinrichtung, UE, und einem Basisstationsknoten des Systems, wobei die UE betreibbar ist, Daten gleichzeitig vom Knoten und von mindestens einer weiteren Quelle zu empfangen, wobei das Verfahren die folgenden Schritte umfasst:
Erzeugen (104) eines Maßes, das die durch die UE von der oder jeder weiteren Quelle empfangenen Datenmenge repräsentiert, wobei die Datenmenge und ein Maß davon unbekannt oder a priori nicht verfügbar sind; und
Verwenden (107) des erzeugten Maßes, um einen Plan für eine Datenkommunikation zwischen der UE und dem Basisstationsknoten zu regeln, **dadurch gekennzeichnet, dass**:
das Erzeugen eines Maßes das Überwachen der Verkehrsdaten am Basisstationsknoten, die die Daten repräsentieren, die von der UE von der mindestens einen weiteren Quelle empfangen werden, beinhaltet, und
die Verkehrsdaten von der UE zum Basisstationsknoten übertragen oder unter Verwendung einer Steuerung des Basisstationsknotens erzeugt werden, die betreibbar ist, die von der UE von der mindestens einen weiteren Quelle empfangenen Datenmenge abzuleiten oder zu bestimmen,
wobei der Plan für eine Datenkommunikation zwischen der UE und dem Basisstationsknoten geregelt wird, um einen vorbestimmten minimalen Datendurchsatz zur UE bereitzustellen.

2. Verfahren nach Anspruch 1, wobei der Plan für eine Datenkommunikation zwischen der UE und dem Basisstationsknoten geregelt wird, um einen vorbestimmten minimalen Datendurchsatz zur UE bzw. zu jeweiligen von mehreren weiteren UEs des Systems, die kommunikativ an den Basisstationsknoten gekoppelt sind, bereitzustellen.

3. Knoten in einem Kommunikationssystem mit Mehrfachfunkzugriffstechnologie, RAT, der betreibbar ist, eine Teilnehmereinrichtung, UE, zu bedienen, die in der Lage ist, vom Knoten und mindestens einer weiteren Quelle Daten gleichzeitig zu empfangen, wobei der Knoten Folgendes umfasst:
eine Steuerung zum Erzeugen eines Maßes, das die durch die UE von der oder jeder weiteren Quelle empfangene Datenmenge repräsentiert, wobei die Datenmenge und ein Maß davon unbekannt oder a priori nicht verfügbar sind; und
einen Planer zum Regeln eines Plans für eine Datenkommunikation zwischen der UE und dem Knoten unter Verwendung des von der Steuerung erzeugten Maßes, wobei der Planer betreibbar ist, eine Datenkommunikation zur UE zu regeln, um einen vorbestimmten minimalen Datendurchsatz zur UE bereitzustellen.

4. Knoten nach Anspruch 3, wobei die Steuerung betreibbar ist, Verkehrsdaten, die Daten repräsentieren, die von der UE von der oder jeder weiteren Quelle empfangen werden, zu empfangen oder zu überwachen.

5. Knoten nach Anspruch 3 oder 4, wobei der Planer betreibbar ist, eine Datenkommunikation zur UE zu regeln, um einen vorbestimmten minimalen Datendurchsatz zur UE bzw. zu anderen von mehreren weiteren UEs, die kommunikativ an den Knoten gekoppelt sind, bereitzustellen.

6. Knoten nach Anspruch 5, wobei die Steuerung betreibbar ist, Verkehrsdaten, die Daten repräsentieren, die von jeweiligen der mehreren weiteren UEs empfangen werden, zu empfangen oder zu überwachen.

## Revendications

1. Procédé dans un système de communication de technologie d'accès radio multiple, RAT, pour l'allocation de ressources entre un équipement utilisateur, UE, et un noeud de station de base du système, dans lequel l'UE peut fonctionner pour recevoir des données simultanément du noeud et d'au moins une autre source, le procédé comprenant les étapes suivantes :
générer (104) une mesure représentant la quantité de données reçues de l'autre ou des autres sources par l'UE, la quantité de données et une mesure de celle-ci étant inconnues ou indisponibles a priori ; et
utiliser (107) la mesure générée pour réguler une planification des communications de données entre l'UE et le noeud de station de base, **caractérisé en ce que** :
la génération d'une mesure comporte la surveillance, au niveau du noeud de station de base, de données de trafic représentant des données reçues de l'au moins une autre source par l'UE, et
les données de trafic sont transmises au noeud de station de base par l'UE, ou générées à l'aide d'un contrôleur du noeud de station de base pouvant fonctionner pour déduire ou déterminer la quantité de données reçues de l'au moins une autre source par l'UE,
dans lequel la planification des communications de données entre l'UE et le noeud de station de base est régulée pour fournir un débit de données minimal prédéterminé à l'UE.

2. Procédé selon la revendication 1, dans lequel la planification des communications de données entre l'UE et le noeud de station de base est régulée pour fournir un débit de données minimal prédéterminé à l'UE et à des UE respectifs de multiples autres UE du système couplés en communication avec le noeud de station de base.

3. Noeud, dans un système de communication de technologie d'accès radio multiple, RAT, pouvant fonctionner pour desservir un équipement utilisateur, UE, en mesure de recevoir des données simultanément du noeud et d'au moins une autre source, le noeud comportant :
un contrôleur pour générer une mesure représentant la quantité de données reçues de l'autre ou des autres sources par l'UE, la quantité de données et une mesure de celle-ci étant inconnues ou indisponibles a priori ; et
un planificateur pour réguler une planification des communications de données entre l'UE et le noeud à l'aide de la mesure générée par le contrôleur, dans lequel le planificateur peut fonctionner pour réguler une communication de données vers l'UE afin de fournir un débit de données minimal prédéterminé à l'UE.

4. Noeud selon la revendication 3, dans lequel le contrôleur peut fonctionner pour recevoir ou surveiller des données de trafic représentant des données reçues de l'autre ou des autres sources par l'UE.

5. Noeud selon les revendications 3 ou 4, dans lequel le planificateur peut fonctionner pour réguler une communication de données vers l'UE afin de fournir un débit de données minimal prédéterminé à l'UE et à des UE respectifs de multiples autres UE couplés en communication avec le noeud.

6. Noeud selon la revendication 5, dans lequel le contrôleur peut fonctionner pour recevoir ou surveiller des données de trafic représentant des données reçues par des UE respectifs des multiples autres UE.
